# DEMANDE DE BREVET EUROPEEN

(11) **EP 1 850 577 A1**
(43) Date de publication de la demande: **31.10.2007**
(21) Numéro de dépôt: 06358007.0
(22) Date de dépôt: 28.04.2006
(51) Int. Cl.: H04M 19/08, H02J 7/35

(54) **Téléphone portable comportant une alimentation électrique de type photovoltaïque**

(71) Demandeur: Charlier, Jean-Philippe, 13015 Marseille (FR)
(72) Inventeur: Charlier, Jean-Philippe, 13015 Marseille (FR)
(74) Mandataire: Roman, Michel

(57) **Abrégé**

La présente invention a pour objet un téléphone portable comportant une alimentation électrique de type photovoltaïque.

II est constitué d'un appareil téléphonique portable (1) et d'au moins une photopile (2, 3, 4), ou platine de cellules photovoltaïques, à haut rendement, intégrée de façon fixe ou amovible audit appareil, disposée et dimensionnée de manière pouvoir capter une énergie suffisante pour assurer le fonctionnement de l'appareil, seule ou associée à une batterie rechargeable.

L'invention se rapporte d'une manière générale au domaine industriel et commercial de la fabrication et de la diffusion de téléphones transportables sans fil ou "mobiles" permettant de communiquer de tous lieux, et en particulier en déplacement.

## Description

La présente invention a pour objet un téléphone portable comportant une alimentation électrique de type photovoltaïque.

Elle se rapporte d'une manière générale au domaine industriel et commercial de la fabrication et de la diffusion de téléphones transportables sans fil ou "mobiles" permettant de communiquer de tous lieux, et en particulier en déplacement.

Les appareils de ce type sont actuellement alimentés par une batterie électrique dont l'autonomie est limitée en particulier en raison de son poids nécessairement réduit pour ne pas alourdir le téléphone qui en est équipé. Celà entraîne l'obligation de recharges périodiques assez fréquentes et il n'est pas rare de voir une conversation s'interrompre de façon intempestive parce que la batterie est arrivée en fin de charge.

Or il existe depuis un certain temps déjà un moyen permettant de produire de l'électricité à partir du rayonnement lumineux ambiant dont la longueur d'onde peut être comprise dans le spectre visible, dans l'infrarouge ou l'ultraviolet. Il s'agit de la photoélectricité qui, dans certains corps (semiconducteurs, notamment), libère des électrons sous l'effet de l'énergie communiquée par les photons qui les atteignent, ce qui provoque, sous l'effet d'un flux lumineux, l'apparition d'une différence de potentiel entre deux couches d'une plaquette de semi-conducteur dont les conductibilités sont opposées, ou entre un semi-conducteur et un métal. Ce phénomène a donné lieu à la réalisation des cellules photovoltaïques, ou photopiles, ou piles solaires, qui transforment directement l'énergie lumineuse en énergie électrique.

L'efficacité des cellules photovoltaïques ne cesse de croître et les dernières réalisations dans ce domaine atteignent, sous un volume très réduit, un rendement suffisament élevé pour fournir le courant électrique nécessaire pour faire fonctionner des systèmes électroniques.

Ces équipements sont déjà utilisés pour recharger les batteries de téléphones mobiles.
On peut citer par exemple la demande de brevet N° WO 007 6051 qui décrit un bloc d'alimentation portatif spécialement conçu pour la recharge de blocs batteries de téléphones portables et comprenant un boîtier dont au moins une surface est pourvue de plusieurs cellules solaires couplées à un circuit de commande de la tension d'alimentation du bloc batterie à recharger.
Un autre brevet, publié sous le numéro FR 2 844 660 concerne un dispositif d'alimentation pour la recharge de batterie, caractérisé en ce qu'il comprend un film solaire composé d'un substrat souple sur lequel est déposée une pluralité de cellules solaires photovoltaïques utilisées comme source d'énergie électrique et des moyens de connexion électrique vers la batterie.
Malheureusement, ces chargeurs augmentent l'encombrement du téléphone, ce qui va à l'encontre d'un des principaux intérêts de ces appareils qui est précisément leur taille de plus en plus faible permettant de les loger aisément dans une poche ou un sac à main.

Le dispositif selon la présente invention a pour objectif de pallier les inconvénients exposés ci-dessus grâce à un système d'alimentation électrique ou de recharge de batterie pour téléphones portables utilisant des cellules photovoltaïques. Il permet d'éviter la panne de l'appareil lors d'une utilisation intensive de celui-ci et de prolonger la durée de la charge de la batterie, ou de fournir de l'énergie électrique lorsque cette charge est entièrement utilisée, ou même de supprimer complètement cette dernière.

Il est constitué d'au moins une photopile, ou platine de cellules photovoltaïques, à haut rendement, intégrée de façon fixe ou amovible à un appareil téléphonique portable, disposée et dimensionnée de manière pouvoir capter une énergie suffisante pour assurer le fonctionnement de l'appareil, seule ou associée à une batterie rechargeable.

Sur les dessins annexés, donnés à titre d'exemples non limitatifs de formes de réalisation conformes à la présente demande :
la figure 1 représente, vu de face, un téléphone portable équipé d'une platine photovoltaïque en face avant,
les figures 2 et 3 montrent, respectivement vu de dos et de côté, un téléphone portable comportant une platine photovoltaïque en face arrière,
la figure 4 est une vue latérale d'un appareil téléphonique mobile équipé d'un volet articulé portant une platine photovoltaïque
et les figures 5 et 6 sont des vues à échelle réduite, respectivement de côté et de face avant, de l'appareil de l'appareil de la figure 4.

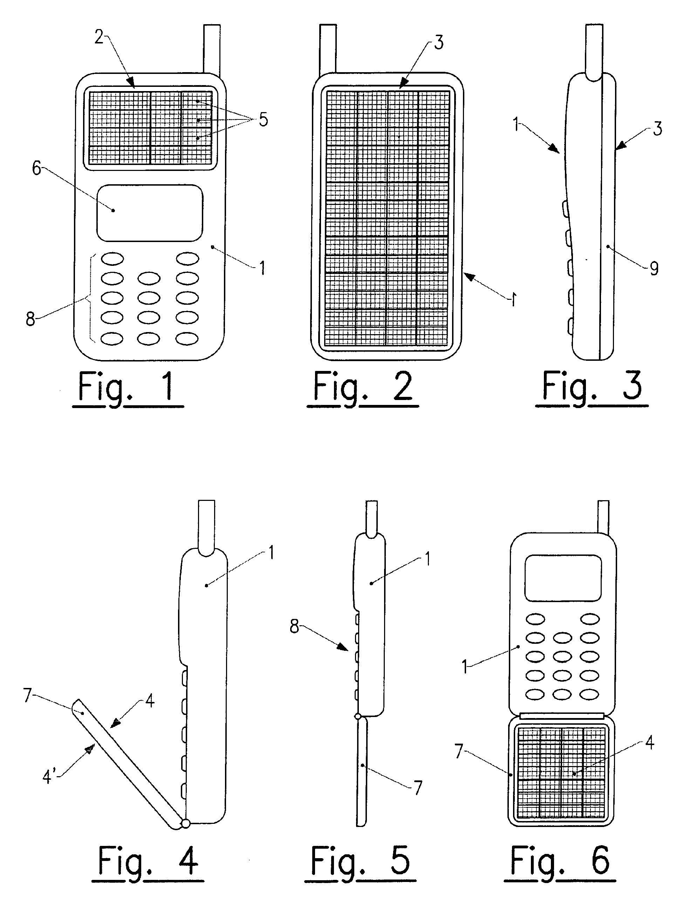

Le dispositif, figures 1 à 6, est constitué d'un téléphone portable 1 de type quelconque comportant une ou plusieurs photopiles ou platines photovoltaïques 2, 3, 4 associée(s) ou non avec une batterie rechargeable, la ou les photopile(s) assurant éventuellement seule(s) l'alimentation électrique.

La ou les photopile(s) sont constituées d'une série de cellules photovoltaïques 5 montées en série de manière à obtenir un courant électrique de voltage suffisant.

Plusieurs dispositions peuvent être envisagées :
- Une photopile 2 en face avant du téléphone portable 1 située de préférence au dessus de l'écran 6 (figure 1).
- Une photopile 3 au dos de l'appareil, ce qui permet une surface, et donc une énergie, plus importante (figures 2 et 3).
- Une photopile 4, 4' montée sur un volet articulé 7 se rabattant sur le clavier 8 ou sur toute la face avant du téléphone 1. Cette photopile peut être installée sur l'une ou l'autre des faces du volet 7 qui pourra éventuellement comporter une photopile sur chacune des deux faces.
- Combinaison de deux ou trois des dispositions décrites ci-dessus, de façon à augmenter la surface exposée aux rayons lumineux.

La photopile, en particulier lorsqu'il s'agit d'une photopile 3 montée au dos de l'appareil, peut être amovible et agencée pour pouvoir être "clipsée" sur ce dernier, ce qui permet de l'utiliser pour différents téléphones ou d'être remplacée aisément (figure 3).

L'alimentation électrique du téléphone portable 1 peut avantageusement être constituée d'un bloc 9 combinant en un seul élément une pile rechargeable et une photopile 3, l'ensemble, monté au dos du téléphone, étant éventuellement amovible.

Le mode de fonctionnement du dispositif, lorsqu'il comporte une batterie rechargeable, pourra éventuellement être contrôlé à la demande au moyen d'une touche spéciale, d'un article du menu de l'appareil téléphonique ou d'un accessoire branché au système de connexions de mise en charge de l'appareil. Le mode de fonctionnement peut consister en une alimentation par batterie seule, par photopile seule, en une alimentation mixte par les deux sources de courant, ou encore en recharge de la batterie par la ou les photopiles 2, 3, 4.

Le positionnement des divers éléments constitutifs donne à l'objet de l'invention un maximum d'effets utiles qui n'avaient pas été, à ce jour, obtenus par des dispositifs similaires.

## Revendications

1. °. Téléphone portable comportant une alimentation électrique de type photovoltaïque, constituée d'au moins une photopile (2, 3, 4, 4'), ou platine de cellules photovoltaïques à haut rendement, intégrée de façon fixe ou amovible audit appareil téléphonique et ayant pour objet d'éviter la panne de l'appareil téléphonique lors d'une utilisation intensive de celui-ci, et de prolonger la durée de la charge de la batterie, ou même de suprimer complètement cette dernière,
**caractérisé en ce qu'**il est équipé d'un dispositif tel qu'une touche spéciale du clavier (8), ou un article du menu ou encore une commande branchée au système de connexion de mise en charge, agencé pour permettre un contrôle à la demande du mode de fonctionnement de l'appareil téléphonique (1), ledit mode de fonctionnement pouvant consister en une alimentation par batterie seule, par photopile seule, en une alimentation mixte par les deux sources de courant, ou encore en recharge de la batterie par la ou les photopiles (2, 3, 4, 4').

2. °. Téléphone portable selon la revendication 1, **se caractérisant par le fait qu'**il comporte une photopile (4') montée sur la face interne d'un volet articulé (7) se rabattant sur le clavier (8) ou sur la face avant de l'appareil téléphonique (1).

3. °. Téléphone portable selon la revendication 2, **se caractérisant par le fait que** volet articulé (7) comporte une photopile (4, 4') sur chacune des deux faces.

4. °. Téléphone portable selon l'une quelconque des revendications 2 et 3, **se caractérisant par le fait que** le volet articulé (7) est déterminé pour se rabattre sur la totalité de la face avant du téléphone (1).

5. °. Téléphone portable selon l'une quelconque des revendications précédentes, **se caractérisant par le fait qu'**il comporte une photopile (2) en face avant du téléphone portable (1) située de préférence au dessus de l'écran (6)

6. °. Téléphone portable selon l'une quelconque des revendications précédentes, **se caractérisant par le fait qu'**il comporte une photopile (3) disposée au dos de l'appareil téléphonique (1).

7. °. Téléphone portable selon l'une quelconque des revendications précédentes, **se caractérisant par le fait que** la ou les photopiles (2, 3, 4, 4') est(sont) constituée(s) d'une série de cellules photovoltaïques (5) montées en série de manière à obtenir un courant électrique de votage suffisant.

8. °. Téléphone portable selon l'une quelconque des revendications précédentes, **se caractérisant par le fait qu'**il ne comporte pas de batterie, la ou les photopile(s) (2, 3, 4, 4') assurant seule(s) l'alimentation électrique du téléphone portable (1).

9. °. Téléphone portable selon l'une quelconque des revendications précédentes, **se caractérisant par le fait qu'**il comporte bloc (9) monté au dos du téléphone combinant en un seul élément une pile rechargeable et une photopile (3).

10. °. Téléphone portable selon la revendication 9, **se caractérisant par le fait que** le bloc (9) est amovible.
